# EUROPEAN PATENT SPECIFICATION

(11) **EP 3 879 965 B1**
(45) Date of publication and mention of the grant of the patent: **28.09.2022**
(21) Application number: 18829341.9
(22) Date of filing: 19.12.2018
(51) Int. Cl.: A01G 3/047

(54) **CUTTING TOOL**
SCHNEIDWERKZEUG
OUTIL DE COUPE

(30) Priority: 14.11.2018 DE 102018008960
(43) Date of publication of application: 22.09.2021
(73) Proprietor: HUSQVARNA AB, 561 82 Huskvarna (SE)
(72) Inventor: SCHENK, Christoph, 89610 Oberdischingen (DE)
(74) Representative: Finkele, Rolf
(86) International application number: PCT/EP2018/085754
(87) International publication number: WO 2020/098963

(56) References cited:
- EP-A1- 1 625 784
- DE-A1-102009 019 989

## Description

### TECHNICAL FIELD

The present disclosure relates to cutting tools such as hedge clippers. More specifically, the present disclosure relates to a hedge clipper with user-friendly interface and multiple options for varying mechanical advantage to cater to different cutting applications.

### BACKGROUND

Cutting tools such as hedge clippers are widely used to provide a mechanical assistance while performing cutting. Generally, the hedge clippers are used to cut objects such as bushes of different sizes and types. The hedge clippers usually include two cutting blades associated with corresponding handles for ease of handling, while cutting. This arrangement of two cutting blades, although conventional and universal, poses challenges while cutting branches of different sizes.

There have been efforts in the past to address aforementioned issues related to use of hedge clippers particularly for more challenging cutting applications. Till recently, a user had to make use of multiple cutting tools to cater to such challenges. However, some applications came up with use of a gear mechanism integrated with cutting blades of the hedge clipper to allow some respite. But still there were persisting issues related to safety and ease of operation for a common user.

An example of a cutting tool is provided by European Patent 1,625,784 (hereinafter referred to as '784 reference). The '784 reference provides a tool which has two tiltable levers, where each lever includes a corresponding blade. The tool further includes two toothed quadrants (or simply gears) associated with the levers which come into an interference connection with one another. Further, one of the toothed quadrants can be selectively locked by a locking mechanism. However, the '784 reference comes short of providing alternatives for locking mechanism which safely and conveniently allows selective locking of the toothed quadrants depending upon cutting requirements.

Thus, there is a need of an improved cutting tool which allows ease of operation such as cutting of different branches using variable mechanical advantage selectable by means of a user-friendly lockable mechanism.

### SUMMARY

In view of the above, it is an objective of the present invention to solve or at least reduce the drawbacks discussed above. The objective is achieved by a cutting tool according to claim 1.

The cutting tool includes a first lever having a first handle portion and a first cutting blade. Further, the cutting tool includes a gear portion associated with the first cutting blade. The cutting tool includes a second lever having a second handle portion. The cutting tool includes a second cutting blade pivotally coupled to the first lever at a first pivot point, and coupled to the second handle portion at a second pivot point. The cutting tool includes a gear lever pivotally coupled to the second cutting blade and the second handle portion at the second pivot point. The gear lever is operatively coupled with the first gear portion. The cutting tool includes an adjustment mechanism to selectively allow rotation of the gear lever relative to the first gear portion to change mechanical advantage between the first lever and the second lever. The cutting tool's second lever includes a first cut-out portion. The gear lever includes a second cut-out portion. Further, the adjustment mechanism includes at least one protrusion to selectively abut with at least one of the first cut-out portion and the second cut-out portion to restrict further rotational movement of the first cut-out portion and the second cut-out portion respectively. The cutting tool further includes a selection mechanism to selectively align the at least one protrusion with at least one of the first cut-out portion and the second cut-out portion. Thus, the present disclosure provides different options with simple, convenient, and safe locking mechanisms for changing the mechanical advantage of the cutting tool.

In an embodiment not covered by the present invention, the adjustment mechanism is a screw mechanism. Preference for the screw mechanism may be due to ease of implementation along with the safety ensured.

According to the present invention, the adjustment mechanism is a toggle switch mechanism. Alternatively to the screw mechanism, the toggle switch mechanism provides a simple single-press operation to change between different modes of operation of the cutting tool.

In an embodiment not covered by the present invention, the selection mechanism is an adjusting knob of the screw mechanism. This may make the cutting tool more convenient, aesthetically suitable for use by a common user, without compromising on safety and ergonomics.

According to an embodiment of the present invention, the selection mechanism is a toggle button of the toggle mechanism. This mechanism provides another convenient alternative for changing the mechanical advantage, by making use of simple button-pressing action.

According to an embodiment of the present invention, the cutting tool further includes a spring buffer integrated on any of the first lever and the second lever. This enhances operator safety during operation, specifically during more demanding operations of the cutting tool.

Other features and aspects will be apparent from the following description and the accompanying drawings.

### BRIEF DESCRIPTION OF THE DRAWINGS

The invention will be described in more detail with reference to the enclosed drawings, wherein:
**FIG. 1** shows a perspective view of a cutting tool, in accordance with an embodiment of the present invention;
**FIG. 2** shows a cross-sectional view of a screw mechanism of the cutting tool according to an embodiment not covered by the present invention;
**FIG. 3** shows a perspective view of the cutting tool with the screw mechanism for a dynamic cutting mode according to an embodiment not covered by the present invention;
**FIG. 4** shows a perspective view of the cutting tool with the screw mechanism for a powerful cutting mode according to an embodiment not covered by the present invention;
**FIG. 5** shows perspective views of the cutting tool with a toggle mechanism for the dynamic cutting mode, in accordance with another embodiment of the present invention; and
**FIG. 6** shows perspective views of the cutting tool with the toggle mechanism for the powerful cutting mode, in accordance with another embodiment of the present invention.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention can be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

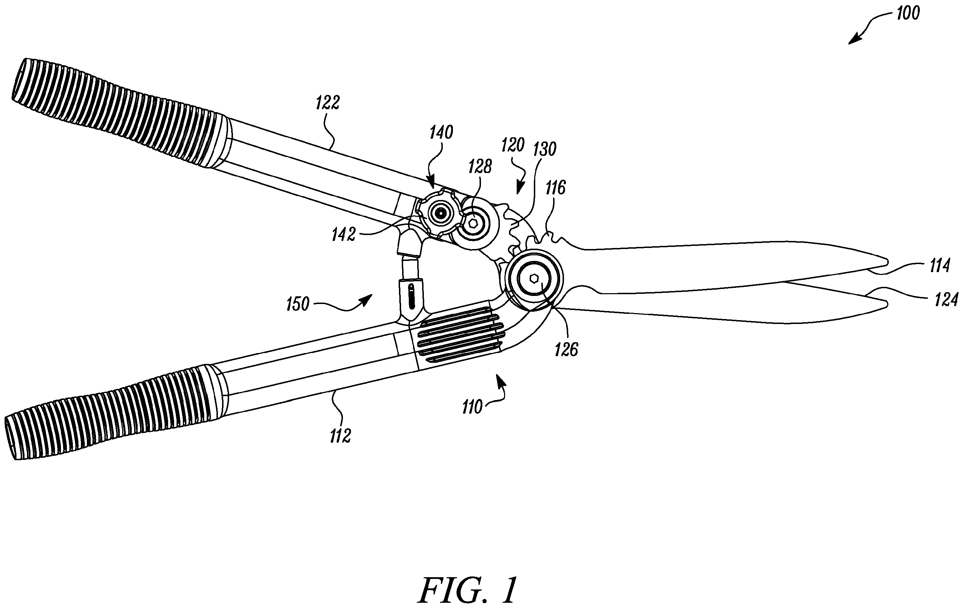

**FIG.** 1 illustrates a cutting tool **100** such as a hedge clipper, garden shear, branch shear or any other cutting tool utilizing two or more cutting implements (simply blades) as known to a person having an ordinary knowledge in the art. Although, the present disclosure illustrates application of the cutting tool **100** as a hedge clipper, the present disclosure is not to be limited by it in any manner. The cutting tool **100** includes a first lever **110** having a first handle portion **112** and a first cutting blade **114.** Further, the cutting tool **100** includes a gear portion **116** associated with the first cutting blade **114.** The cutting tool **100** includes a second lever **120** having a second handle portion **122.** The cutting tool **100** includes a second cutting blade **124** pivotally coupled to the first lever **110** at a first pivot point **126,** and coupled to the second handle portion **122** at a second pivot point **128.**

The cutting tool **100** further includes a gear lever **130** pivotally coupled to the second cutting blade **124** and the second handle portion **122** at the second pivot point **128.** The gear lever **130** is operatively coupled with the first gear portion **116.** The cutting tool **100** includes an adjustment mechanism **140** to selectively allow rotation of the gear lever **130** relative to the first gear portion **116** to change mechanical advantage between the first lever **110** and the second lever **120.**

Preferably, the cutting tool **100** further includes a spring buffer **150** integrated on any of the first lever **110** and the second lever **120.** The present embodiment shows the spring buffer **150** integrated to the first lever **110.** Role of the spring buffer **150** is primarily to absorb any shocks which may occur during demanding applications of the cutting tool **100.** The spring buffer **150** serve as a buffer or cushion for the hands of a user by absorbing any unexpected jerk or force transmitted to the first handle **112** or the second handle **122.** Further, there shall be no restriction on type or placement or number of spring buffer(s) since the present disclosure is not to be limited by the spring buffer **150** in any manner. Moreover, working or action of the spring buffer **150** may be adjusted with change between the "dynamic cutting mode" and the "power cutting mode", or factors such as cutting force, angle of cut, pressure on the first handle **112** or the second handle **122** or any other factor as obvious to a person having knowledge in the art.

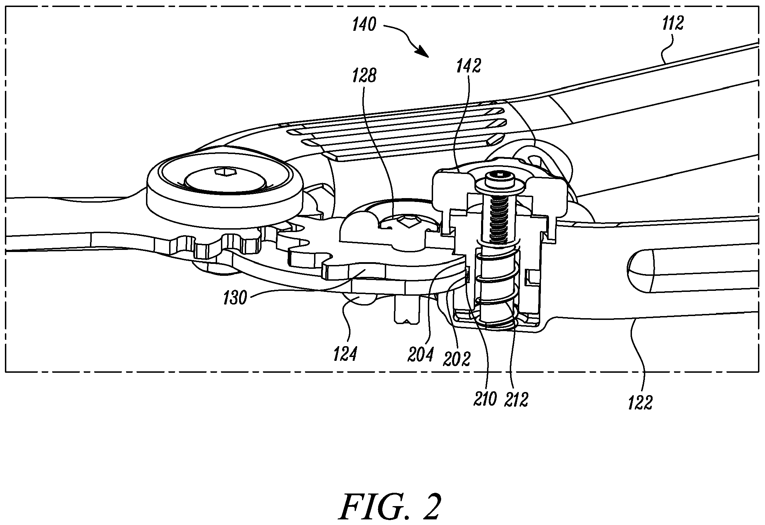

**FIG. 2** shows a cross-sectional view of a screw mechanism **140** of the cutting tool **100,** in accordance with an embodiment of the present invention. As illustrated, the second lever **120** includes a first cut-out portion **202.** The gear lever **130** includes a second cut-out portion **204.** Further, the adjustment mechanism (here the screw mechanism **140)** includes at least one protrusion **210** to selectively abut with at least one of the first cut-out portion **202** and the second cut-out portion **204** to restrict further rotational movement of the first cut-out portion **202** and the second cut-out portion **204** respectively. The cutting tool **100** includes a selection mechanism i.e. an adjusting knob **142** of the screw mechanism **140** to selectively align the at least one protrusion **210** with at least one of the first cut-out portion **202** and the second cut-out portion **204.** This embodiment illustrates the protrusion(s) **210** as a "spacer", however, the present disclosure may be readily implemented using any type of the protrusion(s) such as illustrated by **210, 506** (refer **FIGS. 2****,** **5****,** **6****)** of the present disclosure.

As used herein, the present disclosure refers to "protrusion" or "spacer" which are used in different embodiments of the adjustment mechanism **140, 500** to selectively engage with cut-out portions (i.e. the first cut-out portion **202** and the second cut-out portion **204),** whenever a change between a "dynamic cutting mode" and a "power cutting mode" is required. In some embodiments, the adjustment mechanism **140, 500** may be integrated with sensor(s) to prompt a user to undertake change between the "dynamic cutting mode" and the "power cutting mode". Preferably, any gauge or mechanical/digital means may be integrated with the cutting tool **100** to assist (or prompt) users while selecting any of the "dynamic cutting mode" and the "power cutting mode". The "protrusion" or "spacer" illustrated by the present disclosure are preferable, however, the present disclosure is not to be limited by their shape or size or number in any manner.

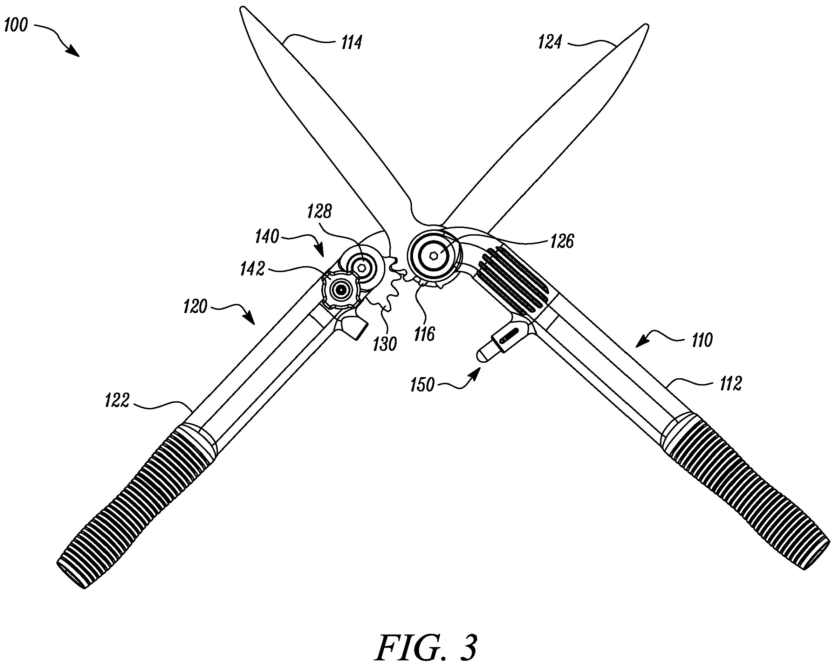

**FIG. 3** shows a perspective view of the cutting tool **100** with the screw mechanism **140** for the "dynamic cutting mode," in accordance with an embodiment of the present invention. For applications requiring comparatively lower mechanical advantage, it may be advantageous to keep the adjustment mechanism **140,** (or the screw mechanism **140),** in a disengaged or OFF state. During implementation, the adjusting knob **142** can be engaged while effectuating any change in state of the adjustment mechanism **140.** The adjusting knob **142** works by rotating it substantially in the plane of the cutting tool **100,** for instance rotation by **180** degrees in a clockwise sense will disengage the adjustment mechanism **140** and vice-versa. Notably, reverse rotation and/or different magnitudes of rotation of the adjusting knob **142** have been contemplated and are well within the scope of the present disclosure. In some embodiments, the cutting tool **100** may include locking means which lock the adjusting knob **142** for the "dynamic cutting mode" or the "power cutting mode", depending upon one or more factors such as cutting force, angle of cut, pressure on the first handle **112** or the second handle **122** or any other factor as obvious to a person having knowledge in the art. This way the angle of opening between the first handle **112** and the second handle **122, α1,** will be substantially similar to the angle of opening between the first blade and the second blade, **α2,** leading to a condition of the "dynamic cutting mode". As will be appreciated by a person having knowledge in the art, this will readily allow cutting of relatively smaller branches with ease.

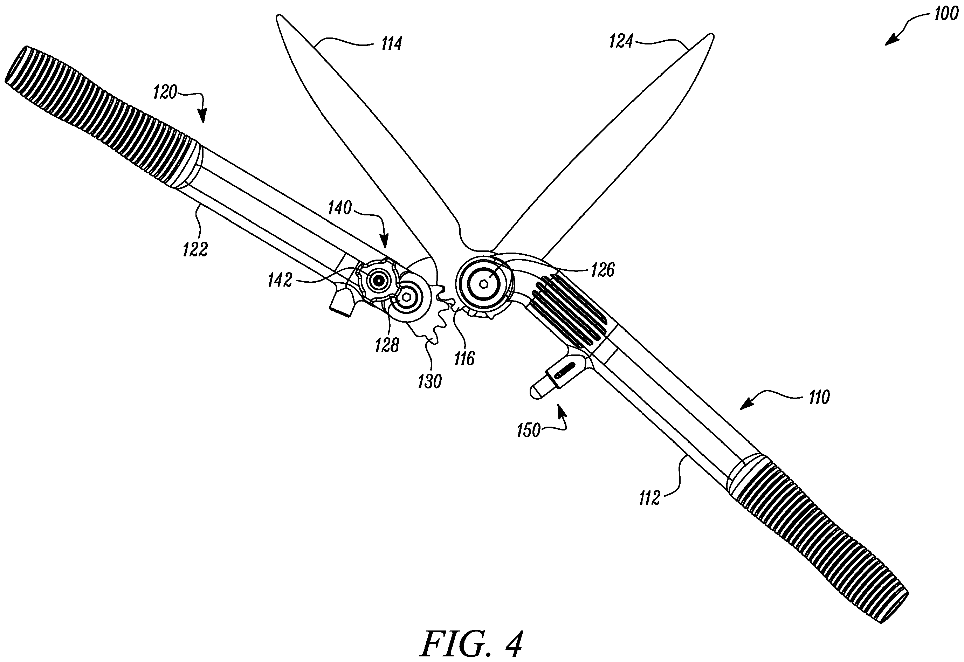

**FIG. 4** shows a perspective view of the cutting tool **100** with the screw mechanism **140** for the "powerful cutting mode", in accordance with an embodiment of the present invention. The powerful cutting mode is expected to be engaged or put in ON state whenever more demanding cutting, such as for relatively bigger branches is required. For instance, if the adjustment mechanism **140** is already in disengaged/OFF state, as elaborated earlier, then there appears a need to rotate the adjusting knob **142** in anti-clockwise sense to turn the adjustment mechanism **140** into engaged/ON state. Referring to the **FIG. 2****,** this rotation of the adjusting knob **142** moves the spacer into engagement with any or both the first cut-out portion **202** and the second cut-out portion **204** of the second lever **120** and the gear lever **130** respectively. This restricts any free rotation of the gear lever **130** leading to a situation which allows substantially higher mechanical advantage in this "powerful cutting mode". As illustrated by the **FIG. 4****,** this mode has the angle of opening between the first handle **112** and the second handle **122, α1,** substantially larger than the angle of opening between the first blade and the second blade, **α2,** thereby providing the higher mechanical advantage.

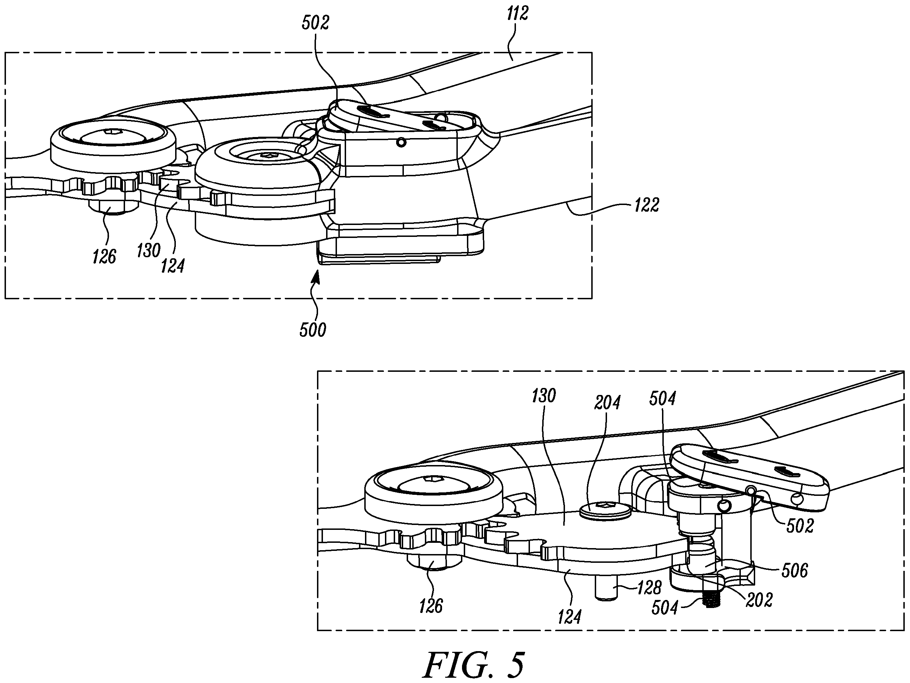

**FIG. 5** shows perspective views of the cutting tool **100** according to the invention where the adjustment mechanism **500** is a toggle switch mechanism **500,** in accordance with another embodiment of the present invention. More particularly, this figure caters to the dynamic cutting mode for the toggle switch mechanism **500.** On comparing with the screw mechanism **140,** in place of the adjusting knob **142** there is a provision for a toggle button **502** in the toggle switch mechanism **500.** During implementation, the toggle button **502** can be pushed down around an end to effectuate mode change (between the dynamic cutting mode and the powerful cutting mode) of the toggle switch mechanism **500.** This figure also illustrates internal arrangement of the toggle switch mechanism which includes spring(s) **504** which bias the protrusion(s) **506.** Moreover, the protrusion(s) **506** engage with the first cut-out portion **202** and the second cut-out portion **204** like working of the screw mechanism **140.** Embodiments of the present disclosure illustrate four protrusions **506,** however, actual implementations may have any different number or size or type of the protrusions including those illustrated by **210, 506** and all such variations are well within the scope of the present disclosure.

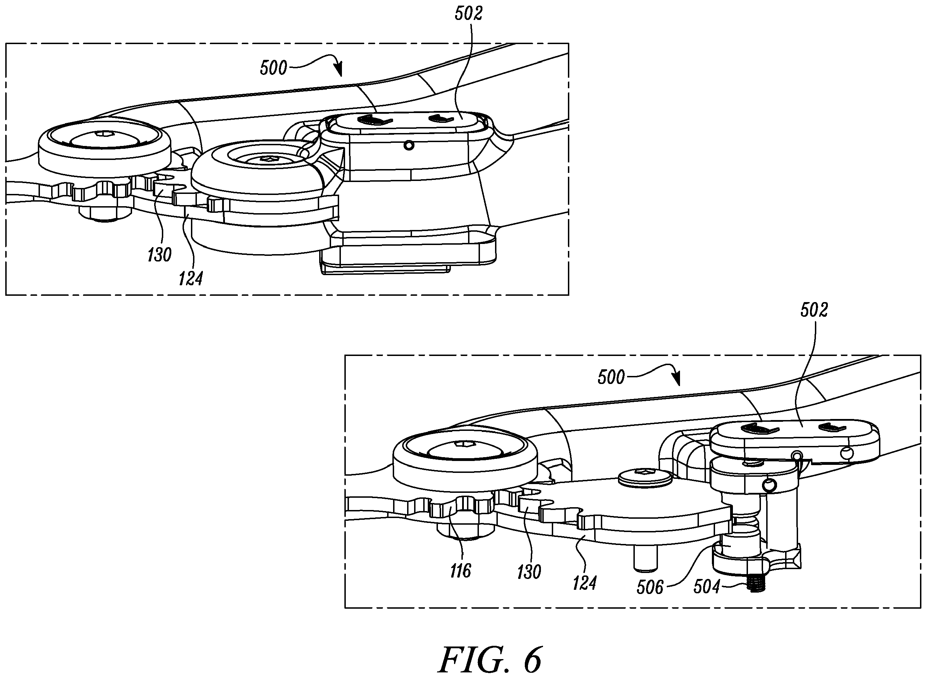

**FIG. 6** shows perspective views of the cutting tool **100** with the toggle switch mechanism **500** for the powerful cutting mode, in accordance with another embodiment of the present invention. During implementation, the toggle switch mechanism **500** can be engaged or turned to ON state by use of the toggle button **502.** During the dynamic cutting mode, the protrusion **506** is disengaged from the first cut-out portion **202** and the second cut-out portion **204.** Now after turning to ON state of the toggle switch mechanism **500** by actuation of the toggle button **502,** the protrusion **506** abuts any or both of the first cut-out portion **202** and the second cut-out portion **204** leading to a higher mechanical advantage between the first lever **110** and the second lever **120.**

Thus, the present disclosure provides the cutting tool **100** with simple, convenient and user-friendly interface to change mechanical advantage between the first lever **110** and the second lever **120.** Moreover, the cutting tool **100** can be implemented while benefitting from operational advantages provided by different selection mechanism **(142, 502),** namely the adjusting knob **(142)** or the toggle button **(502),** depending upon user preferences or the like.

The scope of the invention is defined by the appended claims.

### LIST OF ELEMENTS

- **100**: Cutting Tool
- **110**: First Lever
- **112**: First Handle Portion
- **114**: First Blade
- **116**: Gear Portion
- **120**: Second Lever
- **122**: Second Handle Portion
- **124**: Second Blade
- **126**: First Pivot Point
- **128**: Second Pivot Point
- **130**: Gear Lever
- **140**: Screw Mechanism
- **142**: Adjusting Knob
- **150**: Spring Buffer
- **202**: First Cut-Out Portion
- **204**: Second Cut-Out Portion
- **210**: Protrusion
- **212**: Spring
- **500**: Toggle Switch Mechanism
- **502**: Toggle Button
- **506**: Protrusion
- **504**: Spring
- **α1**: Angle of opening between First Lever and Second Lever
- α**2**: Angle of opening between First Cutting Blade and Second Cutting Blade

## Claims

1. A cutting tool **(100)** comprising:
a first lever **(110)** having a first handle portion **(112)** and a first cutting blade **(114),** wherein a gear portion **(116)** is associated with the first cutting blade **(114);**
a second lever **(120)** having a second handle portion **(122)** and a first cut-out portion **(202);**
a second cutting blade **(124)** pivotally coupled to the first lever **(110)** at a first pivot point **(126),** and coupled to the second handle portion **(122)** at a second pivot point **(128);**
a gear lever **(130)** pivotally coupled to the second cutting blade **(124)** and the second handle portion **(122)** at the second pivot point **(128),** wherein the gear lever **(130)** is operatively coupled with the first gear portion **(116),** and wherein the gear lever **(130)** includes a second cut-out portion **(204);** and
an adjustment mechanism **(500)** adapted to selectively allow rotation of the gear lever **(130)** relative to the first gear portion **(116)** to change mechanical advantage between the first lever **(110)** and the second lever **(120);**
the adjustment mechanism **(500)** includes:
at least one protrusion **(506)** adapted to selectively abut with at least one of the first cut-out portion **(202)** and the second cut-out portion **(204)** to restrict further rotational movement of the first cut-out portion **(202)** and the second cut-out portion **(204)** respectively; and
a selection mechanism **(502)** adapted to selectively align the at least one protrusion **(506)** with at least one of the first cut-out portion **(202)** and the second cut-out portion **(204),**
**characterized in that**:
the adjustment mechanism **(500)** is a toggle switch mechanism **(500),** wherein the toggle switch mechanism **(500)** includes at least one spring **(504)** which bias the at least one protrusion **(506).**

2. The cutting tool **(100)** of claim **1,** wherein the selection mechanism **(502)** is a toggle button **(502)** of the toggle switch mechanism **(500).**

3. The cutting tool **(100)** of claims **1** and 2, wherein the cutting tool **(100)** further includes a spring buffer **(150)** integrated on any of the first lever **(110)** and the second lever **(120).**

## Patentansprüche

1. Ein Schneidwerkzeug **(100),** das Folgendes umfasst:
einen ersten Hebel **(110)** mit einem ersten Griffteil **(112)** und einer ersten Schneidklinge **(114),** wobei der ersten Schneidklinge **(114)** ein Zahnradabschnitt **(116)** zugeordnet ist;
einen zweiten Hebel **(120)** mit einem zweiten Griffteil **(122)** und einem ersten Aussparungsabschnitt **(202);**
eine zweite Schneidklinge **(124), die an** einem ersten Drehpunkt **(126)** schwenkbar mit dem ersten Hebel **(110)** und an einem zweiten Drehpunkt **(128)** mit dem zweiten Griffteil **(122)** verbunden ist;
einen Stellhebel **(130),** der schwenkbar mit der zweiten Schneidklinge **(124)** und dem zweiten Griffteil **(122)** am zweiten Drehpunkt **(128)** gekoppelt ist, wobei der Stellhebel **(130)** funktionsmäßig mit dem ersten Zahnradabschnitt **(116)** gekoppelt ist, und wobei der Stellhebel **(130)** einen zweiten Aussparungsabschnitt **(204)** aufweist; und
einen Einstellmechanismus **(500),** der so ausgebildet ist, dass er selektiv eine Drehung des Stellhebels **(130)** relativ zum ersten Zahnradabschnitt **(116)** ermöglicht, um den mechanischen Vorschub zwischen dem ersten Hebel **(110)** und dem zweiten Hebel **(120)** zu verändern;
der Einstellmechanismus **(500)** umfasst:
mindestens einen Vorsprung **(506),** der so ausgelegt ist, dass er selektiv an mindestens einem von dem ersten Aussparungsabschnitt **(202)** und dem zweiten Aussparungsabschnitt **(204)** anliegt, um eine weitere Drehbewegung des ersten Aussparungsabschnitts **(202)** bzw. des zweiten Aussparungsabschnitts **(204) zu** begrenzen; und
einen Auswahlmechanismus **(502),** der so ausgelegt ist, dass er den mindestens einen Vorsprung **(506)** selektiv mit mindestens einem von dem ersten Ausschnitt **(202)** und dem zweiten Ausschnitt **(204)** ausrichtet,
**dadurch gekennzeichnet**:
der Einstellmechanismus **(500) ein** Kippschaltermechanismus **(500)** ist, wobei der Kippschaltermechanismus **(500)** mindestens eine Feder **(504)** enthält, die den mindestens einen Vorsprung **(506)** vorspannt.

2. Das Schneidwerkzeug **(100)** nach Anspruch **1,** wobei der Auswahlmechanismus **(502)** eine Kipptaste **(502)** des Kippschaltermechanismus **(500)** ist.

3. Das Schneidwerkzeug **(100)** nach einem der Ansprüche **1** und 2, wobei das Schneidwerkzeug **(100)** ferner einen Federpuffer **(150)** aufweist, der in den ersten Hebel **(110)** oder den zweiten Hebel **(120)** integriert ist.

## Revendications

1. Outil de coupe **(100)** comprenant :
un premier levier **(110)** ayant une première partie de poignée **(112)** et une première lame de coupe **(114),** dans lequel une partie d'engrenage **(116)** est associée à la première lame de coupe **(114)** ;
un second levier **(120)** ayant une seconde partie de poignée **(122)** et une première partie découpée **(202)** ;
une seconde lame de coupe **(124)** couplée de manière pivotante au premier levier **(110)** au niveau d'un premier point de pivot **(126),** et couplée à la seconde partie de poignée **(122)** au niveau d'un second point de pivot **(128) ;** un levier d'engrenage **(130)** couplé de manière pivotante à la seconde lame de coupe **(124)** et à la seconde partie de poignée **(122)** au niveau du second point de pivot **(128),** dans lequel le levier d'engrenage **(130)** est couplé de manière opérationnelle à la première partie d'engrenage **(116),** et dans lequel le levier d'engrenage **(130)** inclut une seconde partie découpée **(204)** ; et
un mécanisme de réglage **(500)** apte à permettre sélectivement la rotation du levier d'engrenage **(130)** par rapport à la première partie d'engrenage **(116)** pour changer l'avantage mécanique entre le premier levier **(110)** et le second levier **(120)** ;
le mécanisme de réglage **(500)** inclut :
au moins une saillie **(506)** apte à venir sélectivement en butée contre au moins l'une de la première partie découpée **(202)** et de la seconde partie découpée **(204)** pour restreindre un mouvement de rotation supplémentaire de la première partie découpée **(202)** et de la seconde partie découpée **(204)** respectivement ; et
un mécanisme de sélection **(502)** apte à aligner sélectivement l'au moins une saillie **(506)** avec au moins l'une de la première partie découpée **(202)** et de la seconde partie découpée **(204),**
**caractérisé en ce que** :
le mécanisme de réglage **(500)** est un mécanisme d'interrupteur à bascule **(500),** dans lequel le mécanisme d'interrupteur à bascule **(500)** inclut au moins un ressort **(504)** qui sollicite l'au moins une saillie **(506).**

2. Outil de coupe **(100)** de la revendication **1,** dans lequel le mécanisme de sélection **(502)** est un bouton à bascule **(502)** du mécanisme d'interrupteur à bascule **(500).**

3. Outil de coupe **(100)** des revendications 1 et 2, dans lequel l'outil de coupe **(100)** inclut en outre un amortisseur à ressort **(150)** intégré sur l'un quelconque du premier levier **(110)** et du second levier **(120).**
